# EUROPÄISCHE PATENTSCHRIFT

(11) **EP 3 198 707 B1**
(45) Veröffentlichungstag und Bekanntmachung des Hinweises auf die Patenterteilung: **10.07.2019**
(21) Anmeldenummer: 15787442.1
(22) Anmeldetag: 22.09.2015
(51) Int. Cl.: H02K 19/24, H02K 21/12, H02K 21/44

(54) **ELEKTRODYNAMISCHER WANDLER**
ELECTRODYNAMIC TRANSDUCER
TRANSDUCTEUR ÉLECTRODYNAMIQUE

(30) Priorität: 22.09.2014 DE 102014113648
(43) Veröffentlichungstag der Anmeldung: 02.08.2017
(73) Patentinhaber: Technische Universität Berlin, 10625 Berlin (DE)
(72) Erfinder: DREYER, Robert, 14109 Berlin (DE); MÖNNICH, Oliver, 12167 Berlin (DE); KELP, Martin, 12205 Berlin (DE)
(74) Vertreter: Bittner, Thomas L.
(86) Internationale Anmeldenummer: PCT/DE2015/100399
(87) Internationale Veröffentlichungsnummer: WO 2016/045663

(56) Entgegenhaltungen:
- WO-A1-2013/153575
- DE-A1- 2 727 450
- DE-C- 165 101
- US-A- 2 760 093
- US-A- 4 127 802
- US-A1- 2014 191 701

## Beschreibung

Die Erfindung betrifft einen elektrodynamischen Wandler.

### Hintergrund

Zur Wandlung von mechanischer in elektrische Energie stehen unterschiedliche Generatorprinzipien zur Verfügung. Je nach Baugröße sind die Ausführungsformen der Funktionskomponenten verschiedenartig gestaltet. Bei sehr großen Generatoren werden zur Erzeugung des magnetischen Feldes typischerweise Spulen genutzt, um teure Permanentmagnete zu vermeiden. Die Erzeugung des Magnetfeldes durch einen elektrischen Strom ist jedoch immer mit Verlusten verbunden, die den Wirkungsgrad verschlechtern. Bei kleineren und mittelgroßen Generatoren ist daher der Ensatz von Permanentmagneten üblich. Häufig erfolgt die Energieumwandlung mittels die Umkehrung des Gleichstrom- oder Synchronmotorprinzips, seltener durch die des Asynchronmotors.

Daneben existieren noch so genannte Transversalflussmaschinen, deren Verbreitung außerhalb der Lichtmaschinen im Automobil jedoch gering ist. Das größte Problem bei Transversalflussmaschinen ist deren Aufbau, der üblicherweise die Fertigung unwirtschaftlich teuer macht. Dies liegt insbesondere an der erforderlichen komplizierten Geometrie der flussführenden Teile. Klauenpolgeneratoren sind eine Sonderbauform der Transversalflussmaschinen. Im Kraftfahrzeugbereich wird der Klauenpolgenerator seit einiger Zeit als Lichtmaschine in großen Stückzahlen genutzt (vgl. zum Beispiel DE 10 2007 016 558 und DE 10 2004 032 684). Weiterhin sind Klauenpolgeneratoren in den Dokumenten DE 101 06 519 und DE 102 29 198 sowie ein schleifringloser Klauenpolgenerator in DE 39 17 343 beschrieben. Im Dokument DE 10 2012 001 114 ist die Ausführung eines Stators für eine Transversalflussmaschne offenbart.

Ein miniaturisierter Klauenpolgenerator ist im Dokument DE 102 17 285 offenbart.

Größter Nachteil von üblichen Klauenpolmaschinen ist ihr hohes Rastmoment. Dieses lässt sich zwar durch eine geeignete Gestaltung der Klauen etwas reduzieren. Einer Elimination ist aber bauartbedingt bei allen bisherigen Ausführungsformen eine Grenze gesetzt.

Zur elektrischen Versorgung von kleinen Verbrauchern ist in den letzten Jahren die Nachfrage nach miniaturisierten Generatoren stark angestiegen. Ziel ist es, Geräte autark mit Energie zu versorgen, um neue Funktionen bereitzustellen. Häufig ist dies die Erfassung und drahtlose Weitergabe von Sensordaten. Die benötigten Leistungen sind häufig gering, so dass auch andere Wandlungsprinzipien als elektromagnetische Generatoren erforscht werden, beispielsweise Piezogeneratoren. Deren Leistungsabgabe ist jedoch wesentlich geringer, so dass sie nur für spezielle Anwendungen geeignet sind. Dieses Gebiet wird mit dem englischen Begriff "*Energy harvesting*" bezeichnet. Mit der zunehmenden Vernetzung von Sensoren im industriellen Umfeld und Verbraucherelektronik jeder Art wird das Interesse an miniaturisierten Generatoren in Zukunft weiter zunehmen.

Das Dokument WO 2013/13575 A1 offenbart einen Motor, bei dem ein Rotor mit einer Trennwand ausgebildet ist, die zwischen einem ersten magnetischen Körper und einem zweiten magnetischen Körper angeordnet ist. Vorsprünge der Trennwand blockieren Lücken zwischen vorstehenden Polen des ersten magnetischen Körpers und vorstehenden Polen des zweiten magnetischen Körpers die, mit Blick in axialer Richtung einer Rotationswelle, zueinander verschoben angeordnet sind, um einen Luftstrom in axialer Richtung zu verhindern. Außerhalb der Lücken sind Kerben ausgebildet, um das Volumen der Trennwand zu verringern, um deren Trägheit zu verringern.

Im Dokument DE 165 101 C ist ein Magnetzündinduktor für Explosionsmotoren mit feststehender Spule mit Primär- und Sekundärwicklung und drehbarem Anker beschrieben. Auf jeder Längsseite des Ankers ist je ein parallel zur Drehachse desselben stehender Magnet derart angeordnet, dass die Pole des einen Magneten den gleichnamigen Polen des anderen Magneten gegenüberliegen.

Das Dokument DE 27 27 450 A1 offenbart einen Synchronmotor mit mindestens zwei koaxialen Statorteilen, die mit je mindestens einer ringförmigen Spule versehen sind, wobei diese ringförmige Spule von einem Magnetkreis aus weichferromagnetischem Material umschlossen ist, der einerseits durch einen Rotor mit Verzahnungen und andererseits durch den die betreffende Ringspule umgebenden Statorteil gebildet wird, der in zwei Systeme in einer Kreisform angeordneter Statorzähne mündet, die mit den genannten Rotorverzahnungen über Luftspalte zusammenwirken und in Bezug auf die damit zusammenwirkenden Rotorverzahnungen über einen halben Zahnteilungsabstand gegeneinander verschoben sind.

Das Dokument US 4 127 802 A betrifft einen bidirektionalen Schrittmotor, umfassend gezahnte Rotor- und Statoranordnungen mit Polstücken, die ringförmige Permanentmagnete und Solenoidspulen aufweisen.

### Zusammenfassung

Aufgabe der Erfindung ist es, einen elektrodynamischen Wandler mit verbesserten Betriebseigenschaften zu schaffen.

Diese Aufgabe wird gelöst durch einen elektrodynamischen Wandler nach dem unabhängigen Anspruch 1. Ausgestaltungen sind Gegenstand von abhängigen Unteransprüchen.

Es ist ein elektrodynamischer Wandler vorgeschlagen. Eine Klauenscheibe ist einer Spule zugeordnet und auf einer Seite der Spule angeordnet. Die Klauenscheibe weist ein um eine Drehachse drehbares Scheibenbauteil und ein relativ hierzu feststehendes Scheibenbauteil auf, wobei das drehbare und das feststehende Scheibenbauteil über einander zugeordnete Klauen verfügen, die beim Drehen des drehbaren Scheibenbauteils für die Klauenscheibe abwechselnd eine magnetflussschließende und eine nicht magnetflussschließende Relativstellung einnehmen. Eine weitere Klauenscheibe ist der Spule zugeordnet und auf einer gegenüberliegenden Seite der Spule angeordnet und weist ein um die Drehachse drehbares Scheibenbauteil und ein relativ hierzu feststehendes Scheibenbauteil auf, wobei das drehbare und das feststehende Scheibenbauteil einander zugeordnete Klauen aufweisen, die beim Drehen des drehbaren Scheibenbauteils für die weitere Klauenscheibe abwechselnd eine magnetflussschließende und eine nicht magnetflussschließende Relativstellung einnehmen. Der elektrodynamische Wandler verfügt über Magnetfluss-Bauelemente, die gegensätzlich magnetisierte Magnetbauelemente und Magnetflusselemente aus weich magnetischem Material aufweisen. Von den Magnetfluss-Bauteilen ist im Betrieb jeweils wenigstens ein Teil einem magnetischem Fluss durch die Klauenscheibe oder einem weiteren magnetischen Fluss durch die weitere Klauenscheibe zugeordnet, die sich beim Drehendes drehbaren Scheibenbauteils der Klauenscheibe und des drehbaren Scheibenbauteils der weiteren Klauenscheibe abwechselnd ausbilden abwechselnd ausbilden. Für die Klauenscheibe und die weitere Klauenscheibe sind die magnetflussschließenden Relativstellungen mit einem Winkelversatz zueinander gebildet, wie auch die nicht magnetflussschließenden Relativstellungen.

Der elektrodynamische Wandler weist einen einfachen und kostengünstig herzustellenden Aufbau auf. Eine Miniaturisierung des Aufbaus ist ohne weiteres ermöglicht.

Die Drehachse ist von einem Bauteil bereitgestellt, bei dem es sich zum Beispiel um eine Welle handeln kann, insbesondere eine Rotorwelle. Die drehbaren Scheibenbauteile können sich mit der Welle drehen.

Die drehbaren Scheibenbauteile sind zumindest im Betrieb in ihrer Relativlage zueinander fixiert, so dass ein feststehender Winkelversatz ausgebildet ist. Gleiches gilt für die feststehenden Scheibenbauteile von Klauenscheibe und weiterer Klauenscheibe. Der magnetische Fluss in dem elektrodynamischen Wandler verläuft beim Drehen der drehbaren Scheibenbauteile abwechselnd durch die Klauenscheibe und die weitere Klauenscheibe. Magnetflusselemente können sowohl an dem Magnetflusskreis durch die Klauenscheibe wie auch an dem Magnetflusskreis durch die weitere Klauenscheibe oder auch nur an einem der Magnetflusskreise beteiigt sein.

Die Klauen werden auch als Zahnelemente oder Zähne bezeichnet, so dass dann eine Zahnelement- oder Zahnscheibe gebildet ist.

Der elektrodynamische Wandler kann ein Gehäuse aufweisen. Bei dieser Ausgestaltung können die feststehenden Scheibenbauteile am Gehäuse angeordnet sein. Alternativ kann das Gehäuse drehbar gelagert sein. Im Betrieb können sich dann die drehbaren Scheibenbauteile mit dem Gehäuse drehen.

Die Spule kann drehbar um die Drehachse gelagert sein. Alternativ kann die Spule relativ zur Drehachse fixiert sein, zum Beispiel am Gehäuse.

Die gegensätzlich magnetisierten Magnetbauelemente können Permanentmagnete aufweisen. Die Permanentmagnete können im Betrieb in den Magnetflusskreis durch die Klauenscheibe und / oder den weiteren Magnetflusskreis durch die weitere Klauenscheibe einbezogen sein.

Die gegensätzlich magnetisierten Magnetbauelemente können elektrische Magnete aufweisen. Elektrische Magnete können beispielsweise mittels einer oder mehrere Spulen gebildet sein.

Die gegensätzlich magnetisierten Magnetbauelemente können in Bezug auf die Drehachse axial und / oder radial magnetisierte Magnetbauelemente aufweisen. Ist eine Welle vorgesehen, zum Beispiel eine Rotorwelle, können gegensätzlich magnetisierte Magnetbauelemente hieran angeordnet sein, insbesondere auch als Teil der Welle ausgebildet sein.

Bei dem Gehäuse können ein oder mehrere Gehäuseteile als Magnetflusselemente aus weichmagnetischem Material gebildet sein. Zu dem aus weichmagnetischem Material gebildeten Gehäuseteilen können zum Beispiel ein oder beidseitig angeordnete Deckel gehören. Auch eine Lagerungseinrichtung für eine Welle kann zumindest teilweise aus einem weichmagnetischen Material gebildet sein.

Die Magnetflusselemente können eine Lagereinrichtung einer die Drehachse bereitstellenden Welle überbrückend und hierdurch magnetflussschließend gebildet sein. Die Magnetflusselemente können als Bauteile um die Lagereinrichtung herum geführt sein, sei es mit einem oder mehreren Spalten oder spaltfrei, um so den Magnetfluss um die Lagereinrichtung herumzuführen.

Die Klauenscheibe und die weitere Klauenscheibe können mehrere magnetflussschließende Relativstellungen aufweisen, zum Beispiel wenigstens vier. Eine Ausführung mit acht magnetflussschließenden Relativstellungen, die beim relativen Verdrehen von drehbaren und feststehenden Scheibenbauteil erreicht werden, kann vorgesehen sein.

Klauenanordnungen, die in derselben Ausführung an dem drehbaren Scheibenbauteil der Klauenscheibe und an dem drehbaren Scheibenbauteil der weiteren Klauenscheibe gebildet sind, können mit Winkelversatz zueinander angeordnet sein. Dieselbe Ausführung der Klauenanordnungen kann zumindest hinsichtlich der Anzahl und Formgebung der Klauen gebildet sein. Alternativ kann der mit Winkelversatz zwischen den feststehenden Scheibenbauteilen gebildet sein. Im Betrieb ist die Relativstellung der mit Winkelversatz zueinander angeordneten Scheibenbauteile fixiert.

Bei der Klauenscheibe und / oder bei der weiteren Klauenscheibe können das drehbare Scheibenbauteil als ein innenliegendes Scheibenbauteil und das feststehende Scheibenbauteil als ein außenliegendes Scheibenbauteil gebildet sein. Bei dieser oder anderen Ausführungsformen können sich einander zugeordnete Klauen zumindest in der magnetflussschließenden Relativstellung gegenüberliegen und durch einen Luftspalt getrennt sein.

Klauen an dem drehbaren Scheibenbauteil und dem feststehenden Scheibenbauteil können mit kreisbogenabschnittförmigen Klauen gebildet sein. Seitenkanten der Klauen können zueinander parallel verlaufen.

In der magnetflussschließenden Relativstellung kann ein Spalt zwischen einander gegenüberliegenden Rändern von zugeordneten Klauen, die an dem drehbaren und dem feststehenden Scheibenbauteil gebildet sind, in radialer Richtung im Wesentlichen gleichbleibend breit gebildet sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung eines elektrodynamischen Wandlers im Querschnitt,
- Fig. 2: eine schematische Darstellung einer Klauenscheibe mit innenliegendem Scheibenbauteil und außenliegendem Scheibenbauteil in einer magnetflussschließenden Relativstellung im Schnitt entlang der Linie A-A in Fig. 1,
- Fig. 3: eine schematische Darstellung der Klauenscheibe aus Fig. 2 in einer nicht magnetflussschließenden Relativstellung im Schnitt entlang der Linie B-B in Fig. 1,
- Fig. 4: eine schematische Darstellung einer anderen Klauenscheibe mit innenliegendem Scheibenbauteil und außenliegendem Scheibenbauteil in einer magnetflussschließenden Relativstellung,
- Fig. 5: eine schematische Darstellung der Klauenscheibe aus Fig. 4 in nicht magnetflussschließender Relativstellung,
- Fig. 6: eine schematische Darstellung eines elektrodynamischen Wandlers im Schnitt, bei dem ein magnetischer Fluss durch eine rechtsseitig angeordnete Klauenscheibe verläuft,
- Fig. 7: eine schematische Darstellung des elektrodynamischen Wandlers aus Fig. 6, wobei der magnetische Fluss nun durch eine linksseitig angeordnete Klauenscheibe verläuft,
- Fig. 8: eine schematische Darstellung eines elektrodynamischen Wandlers im Schnitt, bei dem eine Spule auf einer Rotorwelle angeordnet ist,
- Fig. 9: eine schematische Darstellung eines elektrodynamischen Wandlers im Schnitt, bei dem als Permanentmagnete ausgeführte Magnetelemente als Teil einer Rotorwelle gebildet sind,
- Fig. 10: eine schematische Darstellung eines elektrodynamischen Wandlers im Schnitt, bei dem als Permanentmagnete ausgeführte Magnetelemente als Teil eines Gehäusedeckels gebildet sind,
- Fig. 11: eine schematische Darstellung eine elektrodynamischen Wandlers im Schnitt, bei dem Magnetelemente mittels Spulen gebildet sind,
- Fig. 12: eine schematische Darstellung eines elektrodynamischen Wandlers im Schnitt, bei dem Magnetflusselemente eine Lagerung magnetflusskreisschließend gebildet sind,
- Fig. 13: eine schematische Darstellung eines sternförmigen Deckels mit Spulen zur Flusserzeugung für einen elektrodynamischen Wandler und
- Fig. 14: eine perspektivische Darstellung einer Ausführung eines elektrodynamischen Wandlers.

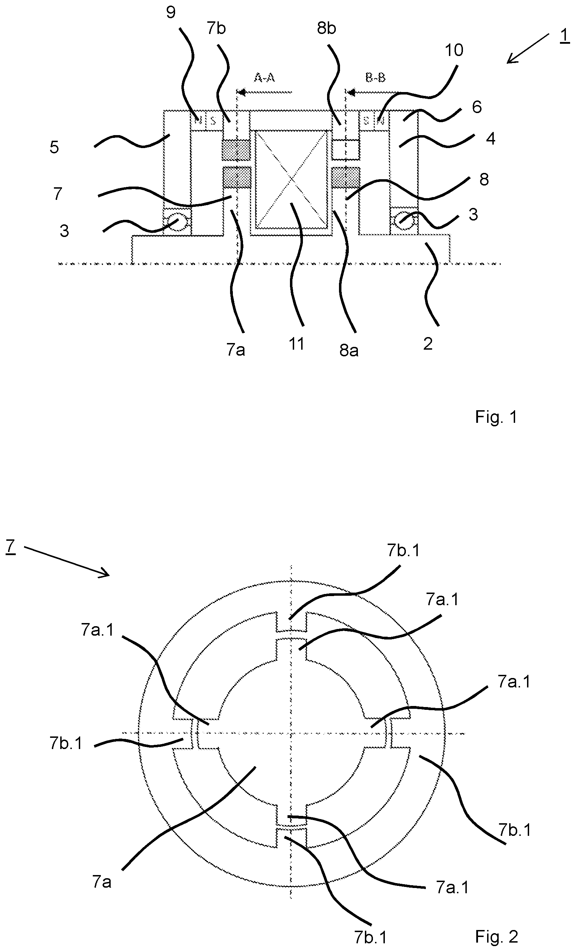

Fig. 1 zeigt eine schematische Darstellung eines Abschnitts eines elektrodynamischen Wandlers 1 im Querschnitt. Es ist eine Rotorwelle 2 vorgesehen, die mit Hilfe einer Lagereinrichtung 3 an Deckeln 4, 5 eines Gehäuses 6 gelagert ist.

Im Gehäuse 6 sind eine Klauenscheibe 7 sowie eine weitere Klauenscheibe 8 aufgenommen. Die Klauenscheibe 7 weist ein drehbares Scheibenbauteil 7a auf, welches an der Rotorwelle 2 angeordnet ist. Ein feststehendes Scheibenbauteil 7b der Klauenscheibe 7 ist am Gehäuse 6 angeordnet. In vergleichbarer Weise weist die weitere Klauenscheibe 8 ein drehbares Scheibenbauteil 8a sowie ein feststehendes Scheibenbauteil 8b auf.

Die Fig. 2 und 3 sowie 4 und 5 zeigen mögliche Ausgestaltungen für die Klauenscheibe 7 und die weitere Klauenscheibe 8. Das drehbare Scheibenbauteil 7a, 8a ist bei dieser Ausführung als innenliegendes Scheibenbauteil ausgeführt, wohingegen das feststehende Scheibenbauteil 7b, 8b außenliegend gebildet ist. Alternativ können die Scheibenbauteile 7a, 8a feststehend und die Scheibenbauteile 7b, 8b drehbar sein (nicht dargestellt). Drehbares und feststehende Scheibenbauteil 7a, 7b; 8a, 8b verfügen über jeweilige Klauen 7a.1, 7b.1; 8a.1, 8b.1, die außen- oder innenliegend angeordnet sind. Alternativ können die Klauen 7a.1, 7b.1; 8a.1, 8b.1 als Zähne oder Zahnelemente bezeichnet werden.

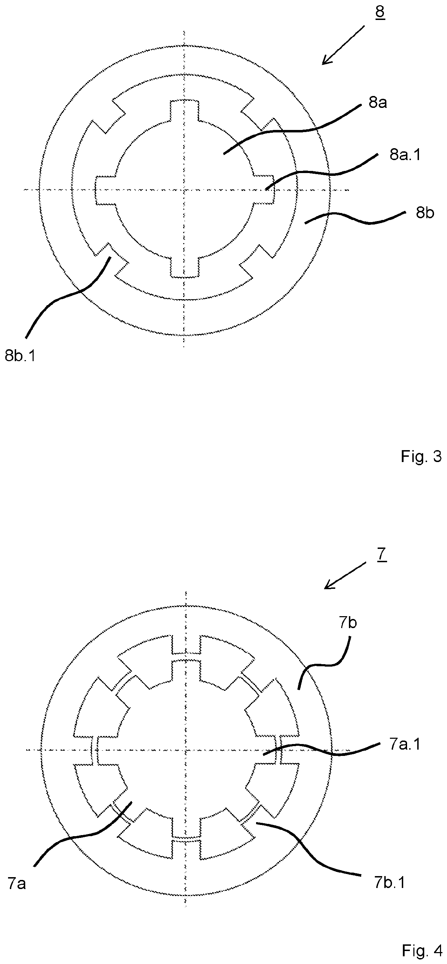

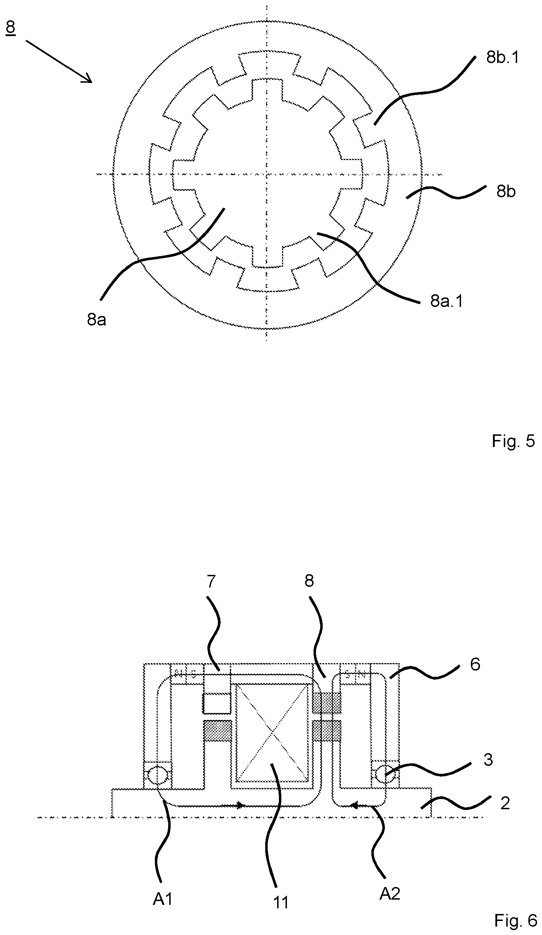

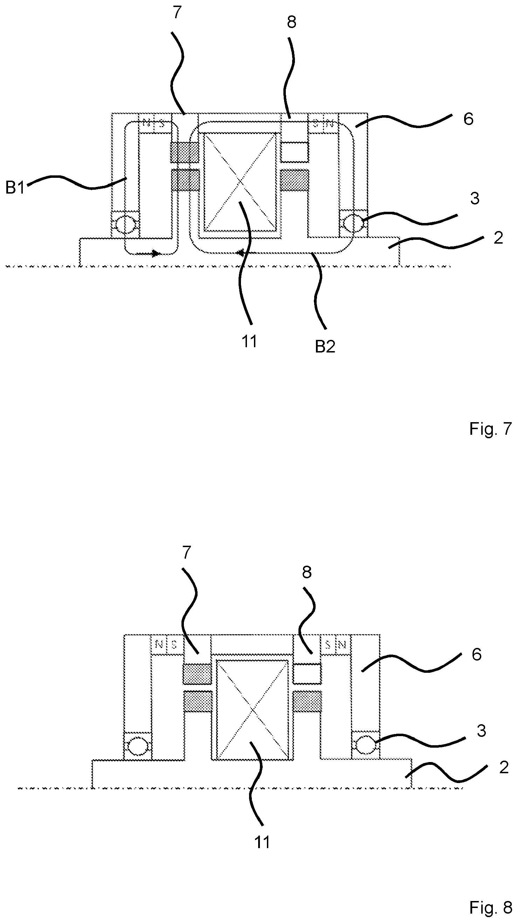

Wird im Betrieb mittels Drehen der Rotorwelle 2 das jeweilige drehbare Scheibenbauteil 7a, 8a gedreht und somit in unterschiedliche Relativstellungen zum jeweiligen feststehenden Scheibenbauteil 7b, 8b gebracht, so stellen sich für die Klauenscheibe 7 sowie die weitere Klauenscheibe 8 magnetflussschließende Relativstellungen (Drehstellungen) (vgl. Fig. 2 und 4) sowie nicht magnetflussschließende Relativstellungen (vgl. Fig. 3 und 5) ein. Ist die jeweilige Klauenscheibe in einer magnetflussschließenden Relativstellung, wie dies die Fig. 2 und 4 zeigen, bildet sich ein magnetischer Fluss durch die Klauenscheibe aus. An dem entsprechenden Magnetflusskreis sind dann gemäß den Fig. 6 und 7 Magnetelemente 9, 10 beteiligt, die in den dargestellten Ausführungsformen als entgegengesetzt magnetisierte Permanentmagnete gebildet sind. Eine Kompensation des Rastmoments ist insbesondere bei dieser Ausführung erreicht mittels Verwendung von zwei zueinander versetzten Klauenscheiben 7, 8. Ist die erste geschlossen, so ist die zweite geöffnet. Eine Rotation der Rotorwelle gegenüber dem Gehäuse führt zum Schließen der geöffneten Klauenscheibe, während die geschlossene geöffnet wird. Das Rastmoment ergibt sich aus dem Hebelarm und der Reluktanzkraft. Letztere ist auf die Änderung des magnetischen Widerstands zurückzuführen. Durch die Verwendung von zwei Klauenscheiben ist es möglich, die Summe der beiden magnetischen Widerstände nahezu konstant zu halten, so dass sich nur eine sehr geringe Änderung des gesamten magnetischen Widerstands und somit auch nur ein sehr geringes Rastmoment ergibt.

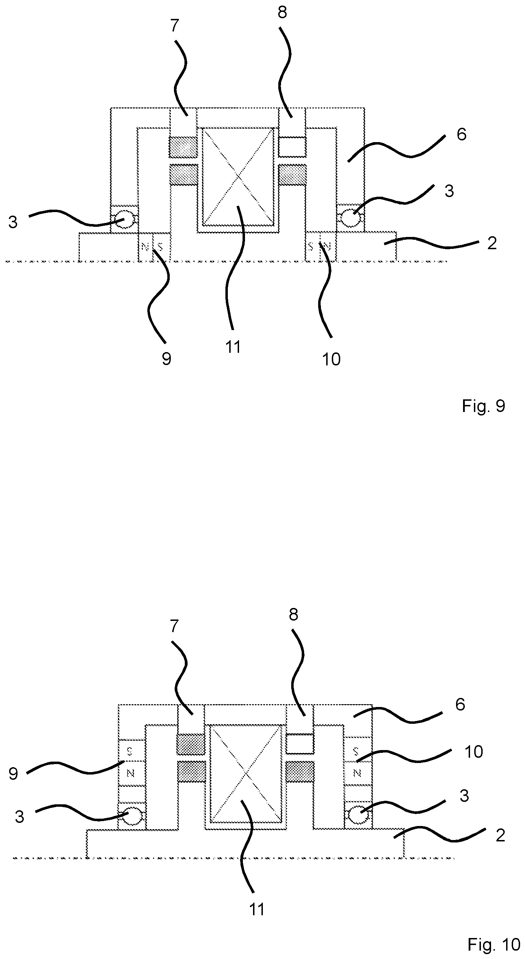

Die dargestellten Ausführungsformen in den Fig. 6 und 7 zeigen axial entgegengesetzt magnetisierte Permanentmagnete, die als Teil des Gehäuses 6 gebildet sind. Alternativ können die entgegengesetzt magnetisierten Magnetelemente 9, 10 auch im Deckel 4, 5 oder an der Rotorwelle 2 angeordnet sein, was in den Fig. 9 und 10 gezeigt ist.

Im Gehäuse 6 sind die Klauenscheibe 7 sowie die weitere Klauenscheibe 8 auf gegenüberliegenden Seiten einer im gezeigten Ausführungsbeispiel als Zylinderspule ausgeführten Spule 11 angeordnet sind.

Bei der Ausführung in den Fig. 1, 6, 7 sowie 9 bis 12 ist die Spule 11 am Gehäuse 6 aufgenommen. In der Fig. 1 ist die Spule fest mit dem Gehäuse verbunden. Dies kann sinnvoll sein, wenn das Gehäuse 6 ortsfest ist und die Rotorwelle 2 gedreht wird, da die Zuleitungen einfach herausgeführt werden können. Soll jedoch das Gehäuse gedreht werden, kann es vorteilhaft sein, die Spule 11 auf der Rotorwelle 2 unterzubringen, was Fig. 8 zeigt. Da das Gehäuse 2 weiter außen liegt, besitzt es in der Regel ein höheres Massenträgheitsmoment als die Rotorwelle 2. Dieses rotieren zu lassen, während die Rotorwelle 2 feststeht, kann daher Vorteile haben, wenn eine große Energiemenge in dem rotierenden Teil gespeichert werden soll oder hohe Anforderungen an einen gleichmäßigen Lauf bestehen.

Bei den Darstellungen in den Fig. 6 und 7 verläuft der mittels Pfeilen A1, A2, B1, B2 dargestellte jeweilige magnetische Fluss, in Abhängigkeit von der Drehstellung der Klauenscheibe 7 und der weiteren Klauenscheibe 8, durch die Klauenscheibe 7 (vgl. Fig. 7) und die weitere Klauenscheibe 8 (vgl. Fig. 6). Dieses bedeutet, dass bei Verwendung einer Klauenscheibe in der Ausführung nach den Fig. 2 und 3 die Klauenscheibe 7 in Fig. 6 in der Relativstellung gemäß Fig. 3 und in Fig. 7 in einer Relativstellung gemäß Fig. 2 angeordnet ist. Für die weitere Klauenscheibe 8 ist dies gerade umgekehrt, was die Folge eines Winkelversatzes der magnetflussschließenden Relativstellungen für die Klauenscheibe 7 einerseits und die weitere Klauenscheibe 8 andererseits ist. Der Magnetfluss wird hier über die Lagereinrichtung 3 geführt.

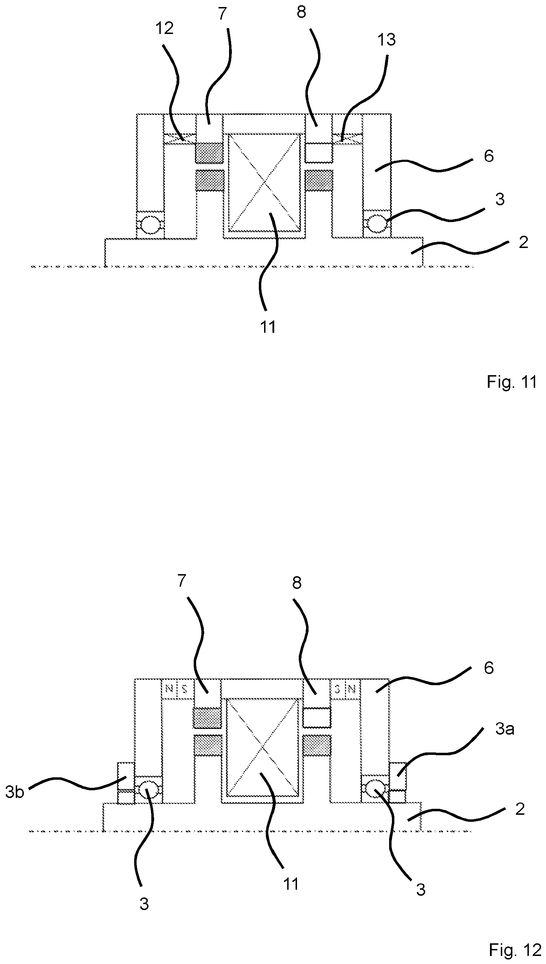

Fig. 11 zeigt eine schematische Darstellung eines elektrodynamischen Wandlers im Schnitt, bei dem Magnetelemente mittels elektrischen Spulen 12, 13 gebildet sind.

Fig. 12 zeigt eine schematische Darstellung eines elektrodynamischen Wandlers im Schnitt, bei dem Magnetelemente 3a, 3b aus weichmagnetischem Material die Lagereinrichtung 3 magnetflussüberbrückend vorgesehen sind. Die Lagereinrichtung 3 wird überbrückt. Dies kann sinnvoll sein, wenn die Lager einen zu hohen magnetischen Widerstand besitzen oder in den Lagerkäfigen Wirbelströme zu einem Bremsmoment führen.

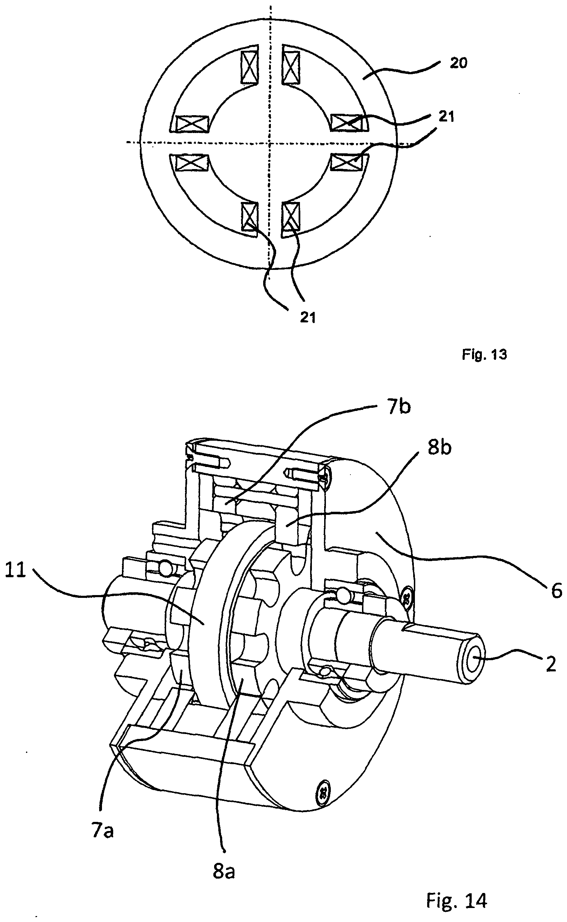

Fig. 13 zeigt eine schematische Darstellung eines sternförmigen Gehäusedeckels 20 mit Spulen 21, von denen vier gezeigt sind, zur Magnetflusserzeugung für einen elektrodynamischen Wandler in einer der erläuterten Ausführungen.

Fig. 14 zeigt eine perspektivische Darstellung eines elektrodynamischen Wandlers. Für die gleichen Merkmale werden in Fig. 14 dieselben Bezugszeichen wie in den vorangehenden Figuren verwendet.

Gegenüber bekannten elektrodynamischen Wandlern mit Klauen- oder Zahnelementscheibe ergibt sich ein vereinfachter Aufbau, insbesondere dadurch, dass zum Beispiel zwei durchgängig in eine Richtung axial magnetisierte Magnete verwendet werden, anstatt von Einzelmagneten oder alternierend magnetisierten Magneten. Einzelmagnete sind aufwendiger zu montieren und neigen zum Verrutschen. Alternierend magnetisierte Permanentmagnete sind dagegen aufwendig in der Herstellung. Beides erhöht die Kosten und steht einem kommerziellen Einsatz entgegen. Axial magnetisierte Magnete sind jedoch leicht zu erhalten oder können auch in Sondergrößen vergleichsweise preiswert von verschiedenen Anbietern nach Kundenwunsch geliefert werden.

Bei dem vorgeschlagenen Aufbau können in den verschiedenen Ausführungen die Luftspalte zwischen zwei flussführenden Weicheisen-Bauteilen liegen. Diese lassen sich ohne erhöhten Aufwand mit hoher Präzision fertigen, wodurch sich der Luftspalt sehr genau einstellen lässt. Hierin kann ein weiterer Vorteil gegenüber anderen Konzepten liegen, bei denen die Permanentmagnete den Luftspalt mitbestimmen. Diese weisen typischerweise eine Toleranz von +/- 0,1 mm auf, weswegen der Luftspalt ebenfalls große Toleranzen besitzt. Dies hat zwei nachteilige Effekte. Einerseits streuen der magnetische Fluss und damit die Ausgangsleistung des Generators recht stark. Auch können von der Berechnung oder über den Umfang abweichende Luftspalte die Kompensation des Rastmoments stören und dieses somit signifikant erhöhen.

Der magnetische Fluss von den Magnetelementen, sei es in Form der Permanentmagnete oder auf Basis der Spulen, wählt jeweils den Weg des geringsten magnetischen Widerstands. Ist eine Klauenscheibe geschlossen, verläuft fast der gesamte Fluss durch diese. Wird die Rotorwelle 2 gegenüber dem Gehäuse 6 gedreht, so werden zueinander versetzt die beiden Klauenscheiben 7, 8 geschlossen, so dass die Spule 11 von einem wechselnden Fluss durchsetzt wird. Dies führt zur Induktion der Generatorspannung in der Spule 11.

Der magnetische Fluss kann auch ohne Permanentmagnete durch zwei oder mehr Spulen 12, 13, 21 erzeugt werden. Diese können wiederum mit dem Gehäuse 6 (siehe Fig. 11 und 13) oder der Rotorwelle 2 verbunden sein.

Je nach Aufbau des elektrodynamischen Wandlers kann es sinnvoll sein, eine oder mehrere Spulen direkt auf die Rotorwelle 2 zu wickeln, um so die Fertigbarkeit zu gewährleisten, ohne eine Teilung der Welle zum Aufschieben der Spule zwischen die Klauenscheiben 7, 8 vorzusehen.

Die Anzahl und Breite der Klauen oder Zahnelemente ist variabel und lässt sich zur Optimierung anpassen. Weiterhin kann auch die Klauenform durch Abrunden der Kanten oder Schrägung entlang der Längsachse verändert werden, um eine verbesserte Magnetflussführung bei geringen Rastmomenten zu erzielen.

Der elektrodynamische Wandler kann in seinen verschiedenen Ausgestaltungen bei geeigneter Bestromung auch als Motor verwendet werden, wenn mindestens zwei Einheiten auf einer Welle oder anderweitig miteinander verbunden werden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Elektrodynamischer Wandler (1), mit
- einer Spule (11),
- einer der Spule (11) zugeordneten Klauenscheibe (7), die auf einer Seite der Spule (11) angeordnet ist und ein um eine Drehachse drehbares Scheibenbauteil (7a) und ein relativ hierzu feststehendes Scheibenbauteil (7b) aufweist, wobei das drehbare und das feststehende Scheibenbauteil (7a, 7b) einander zugeordnete Klauen aufweisen, die beim Drehen des drehbaren Scheibenbauteils (7a) für die Klauenscheibe (7) abwechselnd eine magnetflussschließende und eine nicht magnetflussschließende Relativstellung einnehmen,
- einer weiteren der Spule (11) zugeordneten Klauenscheibe (8), die auf einer gegenüberliegenden Seite der Spule (11) angeordnet ist und ein um die Drehachse drehbares Scheibenbauteil (8a) und ein relativ hierzu feststehendes Scheibenbauteil (8b) aufweist, wobei das drehbare und das feststehende Scheibenbauteil (8a, 8b) einander zugeordnete Klauen aufweisen, die beim Drehen des drehbaren Scheibenbauteils (8a) für die weitere Klauenscheibe (8) abwechselnd eine magnetflussschließende und eine nicht magnetflussschließende Relativstellung einnehmen, und
- Magnetfluss-Bauelementen, die axial entgegengesetzte, gegensätzlich magnetisierte Magnetbauelemente (9, 10; 12, 13) und Magnetflusselemente aus weichmagnetischem Material aufweisen, von denen im Betrieb jeweils wenigstens ein Teil einem magnetischen Fluss durch die Klauenscheibe (7) oder einem weiteren magnetischen Fluss durch die weitere Klauenscheibe (8) zugeordnet ist, die sich beim Drehen des drehbaren Scheibenbauteils (7a) der Klauenscheibe (7) und des drehbaren Scheibenbauteils (8a) der weiteren Klauenscheibe (8) abwechselnd ausbilden,
wobei die magnetflussschließenden Relativstellungen für die Klauenscheibe (7) und die weitere Klauenscheibe (8) mit einem Winkelversatz zueinander gebildet sind, wie auch die nicht magnetflussschließenden Relativstellungen.

2. Elektrodynamischer Wandler nach Anspruch 1, **dadurch gekennzeichnet, dass** die gegensätzlich magnetisierten Magnetbauelemente Permanentmagnete (9, 10) aufweisen.

3. Elektrodynamischer Wandler (1) nach Anspruch 1 oder 2, **dadurch gekennzeichnet, dass** die gegensätzlich magnetisierten Magnetbauelemente elektrische Magnete (12, 13) aufweisen.

4. Elektrodynamischer Wandler (1) nach mindestens einem der vorangehenden Ansprüche, **dadurch gekennzeichnet, dass** die gegensätzlich magnetisierten Magnetbauelemente in Bezug auf die Drehachse axial und / oder radial magnetisierte Magnetbauelemente aufweisen.

5. Elektrodynamischer Wandler (1) nach mindestens einem der vorangehenden Ansprüche, **gekennzeichnet durch** ein Gehäuse (6), wobei ein oder mehrere Gehäuseteile des Gehäuses (6) als Magnetflusselemente aus weichmagnetischem Material gebildet sind.

6. Elektrodynamischer Wandler (1) nach mindestens einem der vorangehenden Ansprüche, **dadurch gekennzeichnet, dass** Magnetflusselemente (3a, 3b) eine Lagereinrichtung (3) einer um die Drehachse drehenden Welle (2) überbrückend und hierdurch magnetflussschließend gebildet sind.

7. Elektrodynamischer Wandler (1) nach mindestens einem der vorangehenden Ansprüche, **dadurch gekennzeichnet, dass** die Klauenscheibe (7) und die weitere Klauenscheibe (8) jeweils mehrere magnetflussschließende Relativstellungen aufweisen.

8. Elektrodynamischer Wandler (1) nach mindestens einem der vorangehenden Ansprüche, **dadurch gekennzeichnet, dass** Klauenanordnungen, die in derselben Ausführung an dem drehbaren Scheibenbauteil (7a) der Klauenscheibe (7) und an dem drehbaren Scheibenbauteil (8a) der weiteren Klauenscheibe (8) gebildet sind, mit Winkelversatz zueinander angeordnet sind.

9. Elektrodynamischer Wandler (1) nach mindestens einem der vorangehenden Ansprüche, **dadurch gekennzeichnet, dass** bei der Klauenscheibe (7) und / oder bei der weiteren Klauenscheibe (8) das drehbare Scheibenbauteil (7a; 8a) als ein innenliegendes Scheibenbauteil und das feststehende Scheibenbauteil (7b; 8b) als ein außenliegendes Scheibenbauteil gebildet sind.

10. Elektrodynamischer Wandler nach mindestens einem der vorangehenden Ansprüche, **dadurch gekennzeichnet, dass** Klauen an dem drehbaren Scheibenbauteil (7a; 8a) und Klauen an dem feststehenden Scheibenbauteil (7b; 8b) mit kreisbogenabschnittförmigen Klauen gebildet sind.

11. Elektrodynamischer Wandler nach mindestens einem der vorangehenden Ansprüche, **dadurch gekennzeichnet, dass** in der magnetflussschließenden Relativstellung ein Spalt zwischen einander gegenüberliegenden Rändern von zugeordneten Klauen, die an dem drehbaren und dem feststehenden Scheibenbauteil (7a; 8a; 7b; 8b) gebildet sind, in radialer Richtung im wesentliche gleichbleibend breit gebildet ist.

12. Elektrodynamischer Wandler nach mindestens einem der vorangehenden Ansprüche, **dadurch gekennzeichnet, dass** die Spule (11) an einer Rotorwelle (2) angeordnet und zusammen mit dieser drehbar ist.

## Claims

1. An electrodynamic transducer (1) comprising
- a coil (11),
- a claw disc (7) assigned to the coil (11) which is arranged on one side of the coil (11) and which comprises a disc component (7a) which is rotatable about a rotary axis and a disc component (7b) which is stationary in relation thereto, wherein the rotatable and the stationary disc component (7a, 7b) comprise claws assigned to each other, which during rotation of the rotatable disc component (7a) for the claw disc (7) alternate between assuming a magnetic-flux-closing relative position and a not-magnetic-flux-closing relative position,
- a further claw disc (8) assigned to the coil (11) which is arranged on an opposite side of the coil (11) and which comprises a disc component (8a) which is rotatable about the rotary axis and a disc component (8b) stationary in relation thereto, wherein the rotatable and the stationary disc component (8a, 8b) comprise claws assigned to each other, which during rotation of the rotatable disc component (8a) for the further claw disc (8) alternate between assuming a magnetic-flux-closing relative position and a not-magnetic-flux-closing relative position, and
- magnetic flux construction elements, which comprise axially opposing, oppositely magnetised magnetic construction elements (9, 10; 12, 13) and magnetic flux elements of a magnetically soft material, of which in operation at least a part is assigned to a magnetic flux through the claw disc (7) or to a further magnetic flux through the further claw disc (8), respectively, which alternate in forming during rotation of the rotatable disc component (7a) of the claw disc (7) and during rotation of the rotatable disc component (8a) of the further claw disc (8),
wherein the magnetic-flux-closing relative positions for the claw disc (7) and the further claw disc (8), as well as the not-magnetic-flux-closing relative positions, are formed with an angular offset to each other.

2. The electrodynamic transducer according to claim 1, **characterised in that** the oppositely magnetised magnetic construction elements comprise permanent magnets (9, 10).

3. The electrodynamic transducer (1) according to claim 1 or 2, **characterised in that** the oppositely magnetised magnetic construction elements comprise electric magnets (12, 13).

4. The electrodynamic transducer (1) according to at least one of the preceding claims, **characterised in that** the oppositely magnetised magnetic construction elements, relative to the rotary axis, comprise axially and/or radially magnetised magnetic construction elements.

5. The electrodynamic transducer (1) according to at least one of the preceding claims, **characterised by** a housing (6), wherein one or more housing parts of the housing (6) are formed as magnetic flux elements from a magnetically soft material.

6. The electrodynamic transducer (1) according to at least one of the preceding claims, **characterised in that** magnetic flux elements (3a, 3b) are formed bridging a bearing device (3) of a shaft (2) rotating about the rotary axis and, as a result, are formed so as to be magnetic-flux-closing.

7. The electrodynamic transducer (1) according to at least one of the preceding claims, **characterised in that** the claw disc (7) and the further claw disc (8) each comprise multiple magnetic-flux-closing relative positions.

8. The electrodynamic transducer (1) according to at least one of the preceding claims, **characterised in that** claw arrangements of identical design formed on the rotatable disc component (7a) of the claw disc (7) and on the rotatable disc component (8a) of the further claw disc (8) are arranged at an angular offset to each other.

9. The electrodynamic transducer (1) according to at least one of the preceding claims, **characterised in that** with the claw disc (7) and/or with the further claw disc (8) the rotatable disc component (7a; 8a) is formed as an inside disc component and the stationary disc component (7b; 8b) is formed as an outside disc component.

10. The electrodynamic transducer according to at least one of the preceding claims, **characterised in that** claws on the rotatable disc component (7a; 8a) and claws on the stationary disc component (7b; 8b) are formed with claws shaped as circular arc sections.

11. The electrodynamic transducer according to at least one of the preceding claims, **characterised in that** in the magnetic-flux-closing relative position, a gap is formed between opposite edges of associated claws formed on the rotatable and on the stationary disc component (7a; 8a, 7b; 8b), which gap is of substantially consistent width in radial direction.

12. The electrodynamic transducer according to at least one of the preceding claims, **characterised in that** the coil (11) is arranged on a rotor shaft (2) and is rotatable in conjunction therewith.

## Revendications

1. Transducteur électrodynamique (1), avec
- une bobine (11),
- un disque à griffes (7) attribué à la bobine (11), qui est disposé sur un côté de la bobine (11) et comporte un composant de disque (7a) pouvant tourner autour d'un axe de rotation et un composant de disque (7b) relativement fixe à cet effet, le composant de disque pouvant tourner et le composant de disque fixe (7a, 7b) comportant des griffes attribuées l'un à l'autre, qui adoptent en alternance une position relative fermant le flux magnétique et une position relative ne fermant pas le flux magnétique lors de la rotation du composant de disque pouvant tourner (7a) pour la disque à griffes (7),
- un autre disque à griffes (8) attribué à la bobine (11), qui est placé sur un côté opposé de la bobine (11) et comporte un composant de disque (8a) pouvant tourner autour de l'axe de rotation et un composant de disque relativement fixe à cet effet (8b), le composant de disque (8a) pouvant tourner et le composant de disque fixe (8b) comportant des griffes attribuées l'un à l'autre, qui prennent en alternance une position relative fermant le flux magnétique et ne fermant pas le flux magnétique lors de la rotation du composant de disque pouvant tourner (8a) pour l'autre disque à griffes (8), et
- des composant à flux magnétique, qui comportent des composants magnétiques axialement opposés, magnétisés de façon contraire (9, 10 ; 12, 13) et des éléments à flux magnétiques dans un matériau magnétique doux, dont, en fonctionnement, au moins une partie est respectivement attribuée à un flux magnétique par le disque à griffes (7) ou à un autre flux magnétique par l'autre disque à griffes (8), qui se constituent en alternance lors de la rotation du composant de disque pouvant tourner (7a) du disque à griffes (7) et du composant de disque pouvant tourner (8a) de l'autre disque à griffes (8),
les positions relatives fermant le flux magnétique pour le disque à griffes (7) et l'autre disque à griffes (8) étant formées avec un déport angulaire l'un par rapport à l'autre, tout comme également les positions relatives ne fermant pas le flux magnétique.

2. Transducteur électrodynamique selon la revendication 1, **caractérisé en ce que** les composants magnétiques magnétisés de façon contraire comportent des aimants permanents (9, 10).

3. Transducteur électrodynamique (1) selon la revendication 1 ou 2, **caractérisé en ce que** les composants magnétiques magnétisés de façon contraire comportent des aimants électriques (12, 13).

4. Transducteur électrodynamique (1) selon au moins l'une quelconque des revendications précédentes, **caractérisé en ce que** les composants magnétiques magnétisés de façon contraire comportent des composants magnétiques axialement et/ou radialement magnétisés par rapport à l'axe de rotation.

5. Transducteur électrodynamique (5) selon au moins l'une quelconque des revendications précédentes, **caractérisé par** un boîtier (6), une ou plusieurs parties de boîtier du boîtier (6) étant formées comme des éléments à flux magnétique faits d'un matériau magnétique doux.

6. Transducteur électrodynamique (1) selon au moins l'une quelconque des revendications précédentes **caractérisé en ce que** les éléments à flux magnétique (3a, 3b) sont formés pontant un dispositif de support (3) d'un arbre (2) tournant autour de l'axe de rotation et fermant de ce fait le flux magnétique.

7. Transducteur électrodynamique (1) selon au moins l'une quelconque des revendications précédentes, **caractérisé en ce que** le disque à griffes (7) et l'autre disque à griffes (8) comportent respectivement plusieurs positions relatives fermant le flux magnétique.

8. Transducteur électrodynamique (1) selon au moins l'une quelconque des revendications précédentes, **caractérisé en ce que** des systèmes de griffes, qui sont formés dans la même exécution sur le composant de disque pouvant tourner (7a) du disque à griffes (7) et sur le composant de disque pouvant tourner (8a) de l'autre disque à griffes (8), sont disposés avec un déport angulaire l'un par rapport à l'autre.

9. Transducteur électrodynamique (1) selon au moins l'une quelconque des revendications précédentes, **caractérisé en ce que** pour le disque à griffes (7) et/ou l'autre disque à griffes (8), le composant de disque pouvant tourner (7a ; 8a) est formé comme un composant de disque situé à l'intérieur et le composant de disque fixe (7b ; 8b) comme un composant de disque situé à l'extérieur.

10. Transducteur électrodynamique selon au moins l'une quelconque des revendications précédentes, **caractérisé en ce que** sur le composant de disque pouvant tourner (7a ; 8a) et sur le composant de disque fixe (7b ; 8b) des griffes sont formées avec des griffes en forme de section d'arc de cercle.

11. Transducteur électrodynamique selon au moins l'une quelconque des revendications précédentes, **caractérisé en ce que** dans la position relative fermant le flux magnétique, un interstice est formé dans la direction radiale étant essentiellement constamment large, entre des bords opposés l'un à l'autre des griffes attribuées, qui sont formés sur le composant de disque pouvant tourner et le composant de disque fixe (7a ; 8a ; 7b ; 8b).

12. Transducteur électrodynamique selon au moins l'une quelconque des revendications précédentes, **caractérisé en ce que** la bobine (11) est placé sur un arbre de rotor (2) et peut tourner conjointement avec celui-ci.
